# EUROPÄISCHE PATENTSCHRIFT

(11) **EP 1 058 168 B1**
(45) Veröffentlichungstag und Bekanntmachung des Hinweises auf die Patenterteilung: **10.11.2004**
(21) Anmeldenummer: 99112290.4
(22) Anmeldetag: 25.06.1999
(51) Int. Cl.: G05B 13/02

(54) **Automatische Lastverstellung**
Method for the automatic adjustment of a load
Procédé de réglage automatique de charge

(30) Priorität: 01.06.1999 DE 19925259
(43) Veröffentlichungstag der Anmeldung: 06.12.2000
(73) Patentinhaber: Linde Aktiengesellschaft, 65189 Wiesbaden (DE)
(72) Erfinder: Ewert, Ulrich, Dipl.-Ing., 83673 Bichl (DE)
(74) Vertreter: Imhof, Dietmar

(56) Entgegenhaltungen:
- EP-A- 0 701 186
- EP-A- 0 786 708
- EP-A- 0 829 784
- DE-A- 19 527 412
- US-A- 5 404 289
- US-A- 5 488 560
- US-A- 5 748 467

## Beschreibung

Die Erfindung betrifft ein Verfahren zur Laständerung einer Luftzerlegungsanlage oder zum Anfahren einer Luftzerlegungsanlage, wobei zumindest eine Regelgröße von einem Anfangswert auf einen Endwert geändert wird und wobei in Abhängigkeit vom Anfangs- und Endwert der Regelgröße der Zielwert einer Stellgröße bestimmt wird und der Wert der Stellgröße von seinem Anfangswert an seinen Zielwert herangeführt wird, wobei eine Kontrollvariable gemessen wird und der Wert der Kontrollvariable mit einem Vergleichswert verglichen wird.

Die Steuerung und Regelung verfahrenstechnischer Anlagen erfolgt in zunehmendem Maße automatisch. So werden zur automatischen Lastverstellung von Tieftemperaturanlagen, insbesondere Luftzerlegungsanlagen, Automatisierungprogramme eingesetzt, die bei einer geplanten Erhöhung oder Erniedrigung einer oder mehrerer Regelgrößen, beispielsweise der Produktmenge an gasförmigem Sauerstoff oder Stickstoff, die Zielwerte der entsprechenden Stellgrößen berechnen und die mit diesen Stellgrößen verknüpften Regler über eine Rampenfunktion an die Zielwerte heranführen. Um das komplexe dynamische Verhalten dieser Anlagen zu kompensieren, werden die Stellgrößen mittels zeitverzögerter Übertragungsfunktionen, z.B. P-T₁- oder PD-T₁- Systemen, verstellt.

Die Parameter dieser Übertragungsfunktionen können bisher durch theoretische Berechnungen noch nicht genau genug bestimmt werden und müssen daher während der Inbetriebnahme der Anlage durch umfangreiche Versuche experimentell ermittelt werden. Problematisch hierbei ist, daß häufig für unterschiedliche Lastverstellungen auch unterschiedliche Parameter notwendig sind. Die Suche nach befriedigenden Parametereinstellungen gestaltet sich daher sehr langwierig. Eine unzureichende Genauigkeit der Parameter und damit der Übertragungsfunktionen führt aber während der Durchführung der Lastverstellung zu einem unerwünschten Verlust der Produktreinheiten.

In der EP 0 829 784 A1 wird ein Temperaturregler beschrieben, der zur Temperaturregelung von Wafem in einem CVD-Reaktor zum Einsatz kommt. Die US 5,748,467 betrifft die Anwendung von Kontrollparametem in nicht-linearen Prozessreglem. Die EP 0 786 708 A1 befasst sich mit einem Fuzzy-Regler bzw. mit einem Verfahren zum Abstimmen der Reglerparameter eines Reglers, der beispielsweise in einem Antrieb in einer Elektroerosionsvorrichtung eingesetzt wird. Auch aus der US 5,488,560 ist ein Verfahren zum Regeln eines Prozesses bekannt. Ferner ist in der US 5,404,289 ein Regler offenbart, bei dem eine spezielle Funktion zur Sollwertgewichtung verwendet wird. Schließlich ist aus der EP 0 701 186 A2 ein Verfahren zur Regelung einer Luftzerlegungsanlage bekannt.

Aufgabe vorliegender Erfindung ist es daher, ein Verfahren der eingangs genannten Art zu entwickeln, bei dem zeitaufwendige Versuchsreihen zur Bestimmung der Parameter der Übertragungsfunktionen möglichst vermieden werden.

Diese Aufgabe wird erfindungsgemäß dadurch gelöst, daß der Wert der Stellgröße mittels einer parameterabhängigen Übertragungsfunktion von seinem Anfangswert an seinen Zielwert herangeführt wird und bei Abweichungen des Wertes der Kontrollvariable von dem Vergleichswert mindestens ein Parameter der Übertragungsfunktion korrigiert wird.

Bei dem neuen Verfahren gemäß der vorliegenden Erfindung werden ausgewählte Prozeßgrößen gemessen und als Kontrollvariablen benutzt, um festzustellen, ob bei einer Änderung einer Regelgröße die entsprechenden Stellgrößen mit zu hoher oder zu niedriger Geschwindigkeit an ihren neuen Zielwert geführt werden. Bei Abweichungen des Wertes einer Kontrollvariable von einem zugehörigen Vergleichswert werden während der Änderung der Stellgrößen die Parameter der zugehörigen Übertragungsfunktion oder auch mehrerer zugehöriger Übertragungsfunktionen neu berechnet und korrigiert. Bei dem erfindungsgemäßen Regelverfahren wird also noch während des Regelprozeßes, das heißt bevor die entsprechenden Regel- und Stellgrößen ihre Zielwerte erreicht haben, das Zeitverhalten der Stellgrößenführung beeinflußt.

Vorzugsweise wird bei Abweichungen des Wertes der Kontrollvariable von dem Vergleichswert der Zielwert der Stellgröße nicht verändert. Es wird also lediglich das Zeitverhalten einer Sollwertführung, das heißt die Geschwindigkeit mit der sich der Wert einer Stellgröße seinem Zielwert annähert, geregelt, nicht jedoch der stationäre Endwert, der nach dem Beenden der Sollwertführung erreicht wird.

Die Erfassung der Kontrollvariablen und deren Vergleich mit dem Vergleichswert kann diskontinuierlich oder kontinuierlich erfolgen. Ein laufendes Messen der Kontrollvariablen und gegebenenfalls eine laufende Korrektur der Parameter der Übertragungsfunktion hat sich als vorteilhaft erwiesen, da auf diese Weise vorgegebene Randbedingungen, beispielsweise bei einer Laständerung einer Luftzerlegungsanlage die Produktreinheiten, besser eingehalten werden können.

Häufig ist es zweckmäßig und ausreichend, bei einer Abweichung des Wertes der Kontrollvariablen von dem Vergleichswert die Zeitkonstante der entsprechenden Übertragungsfunktion zu korrigieren.

Von Vorteil ist der Vergleichswert, mit dem die Kontrollvariable verglichen wird, fest vorgegeben. Es ist aber auch möglich, den Vergleichswert mit Korrekturfaktoren zu versehen, die von dem bisherigen Verlauf der Änderung des Wertes der Stellgröße abhängen.

Durch das erfindungsgemäße Verfahren wird erreicht, daß die Parametereinstellungen der Übertragungsfunktionen nicht mehr genau, sondern nur noch näherungsweise durch Versuchsreihen ermittelt werden müssen. In umfangreichen Untersuchungen hat sich gezeigt, daß unter Abwägung des mit der Parameterbestimmung verbundenen experimentellen Aufwandes und der daraus resultierenden Genauigkeit der Stellgrößenführung eine Vorgabe des Wertes der Parameter der Übertragungsfunktion bis auf eine Größenordnung günstig ist. Die Parameter werden bevorzugt bis auf einen Faktor 5, besonders bevorzugt bis auf einen Faktor 3, vorgegeben. So ist es beispielsweise ausreichend, eine Zeitkonstante auf einen Wert zwischen 100 und 300 Sekunden festzulegen.

Ist die Größenordnung der Parameterwerte bekannt, so werden von Vorteil einfache mathematische Funktionen benutzt, um einen Bereich der gemessenen Kontrollvariable auf einen Parameterbereich abzubilden. Grundsätzlich muß diese Abbildungsfunktion so gewählt werden, daß eine Änderung des Wertes der Kontrollvariablen einen korrigierenden Einfluß auf den Verlauf der Stellgrößenführung besitzt. Vorzugsweise wird hierfür eine Geradengleichung ausgewählt, das heißt eine lineare Abhängigkeit der Parameter der Übertragungsfunktion von der Abweichung des Wertes der Kontrollvariable von dem Vergleichswert angesetzt.

Es ist auch günstig, die Rückkopplung der Kontrollvariable auf die Parameter der Übertragungsfunktion über Regeln der Fuzzy-Logik herzustellen. Da bei der Fuzzy-Logik typischerweise kein exaktes Einhalten eines bestimmten Wertes erforderlich ist, kann die Übertragungsfunktion relativ unscharf formuliert sein. Dies schlägt sich in einem geringen Zeitaufwand zur Bestimmung der Parameter und zur Formulierung der Übertragungsfunktion nieder.

Es hat sich gezeigt, daß es im Hinblick auf die bei einer Änderung einer Regelgröße einzuhaltenden Randbedingungen vorteilhaft ist, bei einer Erhöhung des Sollwertes der Regelgröße eine andere Übertragungsfunktion bzw. eine Übertragungsfunktion mit anderen Parametern zu wählen als bei einer Erniedrigung des Sollwertes der Regelgröße.

Das erfindungsgemäße Verfahren läßt sich vorzugsweise auf alle Arten von Vorwärtssteuerungen und Störgrößenaufschaltungen bei der Steuerung und Regelung anwenden.

Erfingdungsgemäß kommt das Verfahren bei der Regelung einer Tieftemperaturluftzerlegungsanlage zum Einsatz. Besonders bevorzugt bilden hierbei die Menge an einem oder mehreren der Produkte Sauerstoff, Stickstoff oder Argon entweder in gasförmigem oder flüssigem Aggregatszustand die Regelgröße.

Als Kontrollvariablen haben sich die Größen Flüssigkeitsstand, Druck, Temperatur, Durchfluß oder Analyse als günstig erwiesen.

Das erfindungsgemäße Verfahren hat sich insbesondere auch beim automatischen Anfahren von Anlagen bewährt. Zum Starten einer Anlage ist es nur noch nötig, die im stationären Betriebszustand gewünschten Sollwerte, z.B. Produktmengen und Produktreinheiten, vorzugeben, das Anfahren der Anlage erfolgt dann automatisch.

Der neue Endwert einer Regelgröße wird von Vorteil in Abhängigkeit von bestimmten Ereignissen oder bestimmten Kontrollwerten ermittelt. So ist es beispielsweise bei der Steuerung einer Luftzerlegungsanlage günstig, den Druck in einem Sauerstoffprodukttank, die Übergabemenge von Produktsauerstoff an den Verbraucher und/oder deren Zeitabhängigkeiten zu beobachten. Diese Größen lassen Rückschlüsse auf den momentanen und zu erwartenden Produktsauerstoffbedarf zu und können daher ausgenutzt werden, um automatisch entweder eine Lasterhöhung oder eine Lasterniedrigung der Luftzerlegungsanlage einzuleiten.

Vorzugsweise wird die Lastverstellung der Anlage nicht quasistationär durchgeführt, sondern es werden für einzelne Regelgrößen unterschiedliche Gradienten, Totzeiten, Verzögerungen und/oder Vorhalte vorgesehen.

Bei zu großer Abweichung des Wertes der gemessenen Kontrollvariablen von dem Vergleichswert hat es sich auch bewährt, der Stellgröße einmalig eine die Abweichung ausgleichende Störgröße aufzuschalten.

Das erfindungsgemäße Verfahren bringt eine erhebliche Zeitersparnis bei der Inbetriebnahme der Automatisierung einer Tieftemperaturluftzerlegungsanlage. Die Inbetriebnahmekosten der Anlage können dadurch wesentlich reduziert werden. Außerdem wird durch das neue Verfahren eine Qualitätssteigerung des Automatisierungssystems erzielt. Die geforderten Randbedingungen bei der Änderung einer der Regelgrößen des verfahrenstechnischen Prozesses können sicher eingehalten werden. So ist beispielsweise bei einem Lastwechsel einer Luftzerlegungsanlage die Aufrechterhaltung der Produktreinheiten gewährleistet.

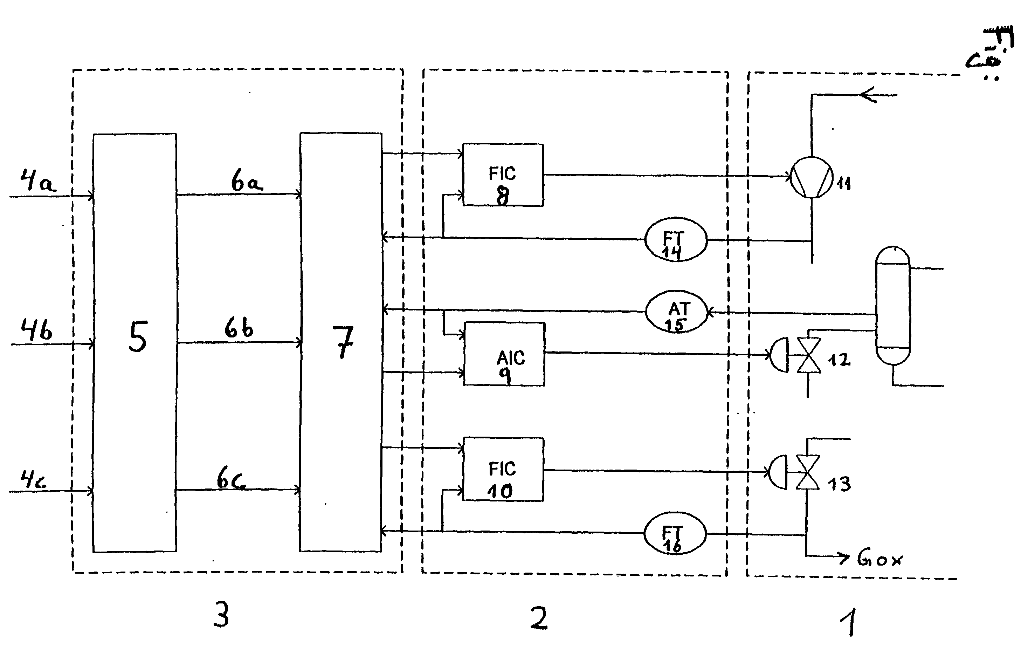

Die Erfindung sowie weitere Einzelheiten der Erfindung werden im folgenden anhand von dem in der Zeichnung dargestellten Ausführungsbeispiel näher erläutert. Hierbei zeigt die Figur schematisch die Regelung und Steuerung einer Luftzerlegungsanlage.

Eine Luftzerlegungsanlage 1 wird von einem automatischen Lastveränderungssystem 2, welches über ein Regelsystem 3 auf verschiedene Komponenten der Luftzerlegungsanlage 1 einwirkt, geregelt. Über die Eingänge 4a bis c können dem System 2 die neuen Sollwerte für bestimmte Regelgrößen vorgegeben werden. Dies können beispielsweise die Einsatzluftmenge, die Menge an gasförmigem Produktsauerstoff und die Menge an flüssigem Produktstickstoff sein.

Das automatische Lastveränderungssystem 2 überprüft in einer ersten Stufe 5, ob die eingegebenen neuen Sollwerte 4a bis 4c miteinander kompatibel sind, d.h. ob es einen stabilen Zustand gibt, in dem alle neuen Sollwerte erfüllt sind. Wenn die neuen Sollwerte 4a bis c den physikalischen Randbedingungen des Luftzerlegungsverfahrens entsprechen, so werden diese als Zielwerte 6a bis c einem Prozeßrechner 7 zugeführt. Ansonsten werden dem das Lastveränderungssystem 2 bedienenden Operateur korrigierte Sollwerte vorgeschlagen und er wird aufgefordert, neue Sollwerte 4a bis c einzugeben.

Der Prozeßrechner 7 wirkt über Regler 8, 9, 10 auf verschiedene Stellglieder 11, 12, 13 ein, um die Regelgrößen von ihrem Ausgangswert allmählich auf den gewünschten Endwert zu ändern. Diese Änderungen verlaufen jeweils entlang zeit- und parameterabhängiger Übertragungsfunktionen. Mittels der Durchflußmesser 14 und 16 sowie des Analysators 15 werden während der Laständerung laufend Kontrollvariablen, nämlich die Einsatzluftmenge, die Menge an gasförmigem Produktsauerstoff und der Sauerstoffgehalt in der Mitte der Drucksäule, gemessen und deren Wert dem Prozeßrechner 7 zugeführt. Der Prozeßrechner 7 vergleicht die gemessenen Kontrollvariablen mit entsprechenden Vergleichswerten und beeinflußt gegebenenfalls die Parameter der Übertragungsfunktionen, mit denen die Stellgrößen 11, 12, 13 auf ihren Zielwert gefahren werden.

So wird beispielsweise mit dem Analysator 15 der Sauerstoffgehalt in der Drucksäulenmitte bestimmt und in dem Prozeßrechner 7 mit einem vorgegebenen Vergleichswert verglichen. Zeigt die Drucksäulenanalyse einen zu hohen Sauerstoffgehalt an, so wird bei einer Lasterhöhung die Einsatzluftmenge langsamer erhöht beziehungsweise bei einer Lasterniedrigung schneller vermindert. Entsprechend wirkt der Regler 9 auf das Ventil 12 ein. Der Endwert, den die Einsatzluftmenge nach Abschluß der Laständerung im stationären Zustand erreicht, wird dabei nicht beeinflußt.

## Patentansprüche

1. Verfahren zur Laständerung einer Luftzerlegungsanlage oder zum Anfahren einer Luftzerlegungsanlage, wobei zumindest eine Regelgröße von einem Anfangswert auf einen Endwert geändert wird und wobei in Abhängigkeit vom Anfangs- und Endwert der Regelgröße der Zielwert einer Stellgröße bestimmt wird und der Wert der Stellgröße von seinem Anfangswert an seinen Zielwert herangeführt wird, wobei eine Kontrollvariable gemessen wird und der Wert der Kontrollvariable mit einem Vergleichswert verglichen wird, **dadurch gekennzeichnet, daß** der Wert der Stellgröße mittels einer parameterabhängigen Übertragungsfunktion von seinem Anfangswert an seinen Zielwert herangeführt wird und bei Abweichungen des Wertes der Kontrollvariable von dem Vergleichswert mindestens ein Parameter der Übertragungsfunktion korrigiert wird.

2. Verfahren nach Anspruch 1, **dadurch gekennzeichnet, daß** bei Abweichungen des Wertes der Kontrollvariable von dem Vergleichswert der Zielwert der Stellgröße nicht verändert wird.

3. Verfahren nach einem der Ansprüche 1 oder 2, **dadurch gekennzeichnet, daß** der Wert der Kontrollvariable kontinuierlich mit dem Vergleichswert verglichen wird.

4. Verfahren nach einem der Ansprüche 1 bis 3, **dadurch gekennzeichnet, daß** eine Zeitkonstante der Übertragungsfunktion korrigiert wird.

5. Verfahren nach einem der Ansprüche 1 bis 4, **dadurch gekennzeichnet, daß** der Wert der Kontrollvariable mit einem vorgegebenen Vergleichswert verglichen wird.

6. Verfahren nach einem der Ansprüche 1 bis 5, **dadurch gekennzeichnet, daß** der Parameter der Übertragungsfunktion aus der Abweichung des Wertes der Kontrollvariable von dem Vergleichswert mittels einer mathematischen Abbildungsfunktion berechnet wird.

7. Verfahren nach einem der Ansprüche 1 bis 6, **dadurch gekennzeichnet, daß** der Parameter der Übertragungsfunktion und die Abweichung des Wertes der Kontrollvariable von dem Vergleichswert über Regeln der Fuzzy-Logik verknüpft sind.

8. Verfahren nach einem der Ansprüche 1 bis 7, **dadurch gekennzeichnet, daß** lediglich die Größenordnung des Parameters der Übertragungsfunktion vorgegeben ist.

9. Verfahren nach einem der Ansprüche 1 bis 8, **dadurch gekennzeichnet, daß** bei einer Erhöhung des Sollwertes der Regelgröße eine andere Übertragungsfunktion gewählt wird als bei einer Erniedrigung des Sollwertes.

10. Verfahren nach einem der Ansprüche 1 bis 9, **dadurch gekennzeichnet, daß** eine Vorwärtsregelung oder Störgrößenaufschaltung zur Anwendung kommt.

11. Verfahren nach einem der Ansprüche 1 bis 10, **dadurch gekennzeichnet, daß** die Menge an gasförmigem und/oder flüssigem Sauerstoff und/oder Stickstoff und/oder Argon die Regelgröße bildet.

12. Verfahren nach einem der Ansprüche 1 bis 11, **dadurch gekennzeichnet, daß** mindestens eine der Größen Flüssigkeitsstand, Druck, Temperatur, Durchfluß oder Analyse als Kontrollvariable gemessen wird.

## Claims

1. Method for changing the load on an air separation plant or for starting up an air separation plant, at least one controlled variable being changed from an initial value to a final value and the target value of a manipulated variable being determined on the basis of the initial and final value of the controlled variable, and the value of the manipulated variable being brought up from its initial value to its target value, a monitoring variable being measured and the value of the monitoring variable being compared with a comparative value, **characterized in that** the value of the manipulated variable is brought up from its initial value to its target value by means of a parameter-dependent function and, if the value of the monitoring variable differs from the comparative value, at least one parameter of the transfer function is corrected.

2. Method according to Claim 1, **characterized in that** if the value of the monitoring variable differs from the comparative value, the target value of the manipulated variable is not changed.

3. Method according to either of Claims 1 and 2, **characterized in that** the value of the monitoring variable is compared continuously with the comparative value.

4. Method according to one of Claims 1 to 3, **characterized in that** a time constant of the transfer function is corrected.

5. Method according to one of Claims 1 to 4, **characterized in that** the value of the monitoring variable is compared with a predefined comparative value.

6. Method according to one of Claims 1 to 5, **characterized in that** the parameter of the transfer function is calculated from the deviation of the value of the monitoring variable from the comparative value by means of a mathematical mapping function.

7. Method according to one of Claims 1 to 6, **characterized in that** the parameter of the transfer function and the deviation of the value of the monitoring variable from the comparative value are linked via fuzzy-logic rules.

8. Method according to one of Claims 1 to 7, **characterized in that** only the order of magnitude of the parameter of the transfer function is predefined.

9. Method according to one of Claims 1 to 8, **characterized in that** if the desired value of the controlled variable is increased, a different transfer function is selected from that in the event of a reduction in the desired value.

10. Method according to one of Claims 1 to 9, **characterized in that** use is made of feedforward control.

11. Method according to one of Claims 1 to 10, **characterized in that** the quantity of gaseous and/or liquid oxygen and/or nitrogen and/or argon forms the controlled variable.

12. Method according to one of Claims 1 to 11, **characterized in that** at least one of the variables liquid level, pressure, temperature, flow or analysis is measured as the monitoring variable.

## Revendications

1. Procédé pour faire varier la charge d'une installation de séparation de l'air ou pour faire démarrer une installation de séparation de l'air, dans lequel au moins une grandeur de réglage est modifiée d'une valeur de départ à une valeur finale et dans lequel, en fonction de la valeur de départ et de la valeur finale de la grandeur de réglage, on détermine la valeur cible d'une grandeur de commande et la valeur de la grandeur de commande est rapprochée depuis sa valeur de départ à sa valeur cible, une variable de contrôle étant mesurée et la valeur de la variable de contrôle étant comparée à une valeur de comparaison, **caractérisé en ce que** la valeur de la grandeur de commande est rapprochée depuis sa valeur de départ à sa valeur cible au moyen d'une fonction de transfert dépendant de paramètres et en cas d'écart entre la valeur de la variable de contrôle et la valeur de comparaison, au moins un paramètre de la fonction de transfert est corrigé.

2. Procédé selon la revendication 1, **caractérisé en ce qu'**en cas d'écart entre la valeur de la variable de contrôle et la valeur de comparaison, la valeur cible de la grandeur de commande n'est pas modifiée.

3. Procédé selon l'une quelconque des revendications 1 ou 2, **caractérisé en ce que** la valeur de la variable de contrôle est comparée en continu à la valeur de comparaison.

4. Procédé selon l'une quelconque des revendications 1 à 3, **caractérisé en ce qu'**une constante de temps de la fonction de transfert est corrigée.

5. Procédé selon l'une quelconque des revendications 1 à 4, **caractérisé en ce que** la valeur de la variable de contrôle est comparée à une valeur de comparaison prédéfinie.

6. Procédé selon l'une quelconque des revendications 1 à 5, **caractérisé en ce que** le paramètre de la fonction de transfert est calculé à partir de l'écart entre la valeur de la variable de contrôle et la valeur de comparaison au moyen d'une fonction de représentation mathématique.

7. Procédé selon l'une quelconque des revendications 1 à 6, **caractérisé en ce que** le paramètre de la fonction de transfert et l'écart entre la valeur de la variable de contrôle et la valeur de comparaison sont liés par des règles de logique floue.

8. Procédé selon l'une quelconque des revendications 1 à 7, **caractérisé en ce que** seulement l'ordre de grandeur du paramètre de la fonction de transfert est prédéfini.

9. Procédé selon l'une quelconque des revendications 1 à 8, **caractérisé en ce que** dans le cas d'une augmentation de la valeur de consigne de la grandeur de réglage, on choisit une autre fonction de transfert que celle dans le cas d'un abaissement de la valeur de consigne.

10. Procédé selon l'une quelconque des revendications 1 à 9, **caractérisé en ce que** l'on utilise une régulation vers l'avant ou une suppression des grandeurs perturbatrices.

11. Procédé selon l'une quelconque des revendications 1 à 10, **caractérisé en ce que** la quantité d'oxygène et/ou d'azote et/ou d'argon liquide et/ou gazeux constitue la grandeur de réglage.

12. Procédé selon l'une quelconque des revendications 1 à 11, **caractérisé en ce que** l'on mesure au moins une des grandeurs du niveau de liquide, de la pression, de la température, du débit ou de l'analyse comme variable de contrôle.
